# EUROPÄISCHE PATENTSCHRIFT

(11) **EP 1 452 772 B1**
(45) Veröffentlichungstag und Bekanntmachung des Hinweises auf die Patenterteilung: **03.03.2010**
(21) Anmeldenummer: 03027598.6
(22) Anmeldetag: 02.12.2003
(51) Int. Cl.: F16H 3/089

(54) **Einrichtung zur Absorption von Drehschwingungen einer Brennkraftmaschine**
Device for the absorption of vibrations of an internal combustion engine
Dispositif d'absorption des vibration d'un moteur à combustion interne

(30) Priorität: 28.02.2003 DE 10308764
(43) Veröffentlichungstag der Anmeldung: 01.09.2004
(73) Patentinhaber: Dr. Ing. h.c. F. Porsche Aktiengesellschaft, 70435 Stuttgart (DE)
(72) Erfinder: Knoblauch, Richard, 71287 Weissach (DE); Exner, Christina, 75428 Illingen (DE)

(56) Entgegenhaltungen:
- WO-A-99/31410
- FR-A- 1 388 980
- US-A- 3 318 168
- US-A- 3 321 988
- US-A- 4 287 791
- US-A- 5 033 323
- US-A- 6 073 506

## Beschreibung

Die Erfindung bezieht sich auf eine Einrichtung zur Absorption von Drehschwingungen einer Brennkraftmaschine, insbesondere für einen Personenkraftwagen nach dem Oberbegriff des Patentanspruchs 1.

Es ist eine Dämpfungseinrichtung zum Aufnehmen bzw. Ausgleichen von Drehstößen, insbesondere von Drehmomentschwankungen einer Brennkraftmaschine bekannt, DE 34 18 671 C2. Bei dieser Dämpfungseinrichtung sind zwei begrenzt zueinander verdrehbare Schwungmassen vorgesehen, wovon die eine an der Brennkraftmaschine und die andere an einer Kupplungsscheibe einer Reibungskupplung vorgesehen ist.

Aus der gattungsgemäßen WO 99/31410 A1 ist ein Getriebe bekannt, in dem eine Getriebeeingangswelle mit einer Brennkraftmaschine durch einen Torsionsstab verbunden ist, der zum Getriebe koaxial angeordnet ist.

In der DE 37 35 855 wird ein Schaltgetriebe für ein Kraftfahrzeug beschrieben, das eine erste Welle und eine zweite Welle für Zahnräder von zu schaltenden Gängen des Schaltgetriebes umfasst. Außerdem ist das Schaltgetriebe mit einer dritten Welle versehen, in die ein Torsionsschwingungs-Absorber eingebaut ist. Der Torsionsschwingungs-Absorber ist vorgesehen um Schaltstöße aufzunehmen, die beim Schließen einer Trennkupplung infolge des unsynchronisierten Zustands von Drehzahl einer Brennkraftmaschine und Drehzahl des Getriebes entstehen.

Aufgabe der Erfindung ist es, eine Einrichtung zur Absorption von Drehschwingungen einer Brennkraftmaschine zu schaffen, die sich auf einfache Weise und mit geringem Bauaufwand zwischen der Brennkraftmaschine und einem Getriebe vorsehen lässt.

Erfindungsgemäß wird diese Aufgabe durch die Merkmale des Patentanspruchs 1 gelöst.

Weitere, die Erfindung ausgestaltende Merkmale sind in den Unteransprüchen enthalten.

Die mit der Erfindung hauptsächlich erzielten Vorteile sind darin zu sehen, dass die Einrichtung durch vorhandene Bauteile nämlich eine Eingangswelle und eine Antriebswelle des Getriebes gebildet wird, die als relativ verdrehweiche Drehstabfedern ausgebildet und mit Drehmassenvorrichtungen versehen sind. Dabei handelt es sich bei den Drehmassenvorrichtungen um Zahnräder, die zur Kraftübertragung von der Eingangswelle auf die Antriebswelle dienen, also Bestandteil des Getriebes sind. Aufgrund der konstruktiven Auslegung der Drehstabfedern und der Drehmassenvorrichtungen an der Eingangswelle und der Antriebswelle ist die Einrichtung, ohne zusätzliche Maßnahmen, dazu geeignet, um Drehschwingungsanregungen der Brennkraftmaschine zu kompensieren. Dadurch werden Spannungsspitzen in den Bauteilen des Getriebes vermieden und Rasselgeräusche von Getriebezahnräder reduziert. Schließlich dämpfen die Mitnehmerverzahnungen zwischen den Naben der Kegelräder der Eingangswelle und der Antriebswelle die Eigenschwingungen der Einrichtung.

In der Zeichnung wird ein Ausführungsbeispiel der Erfindung gezeigt, das nachstehend näher beschrieben wird.

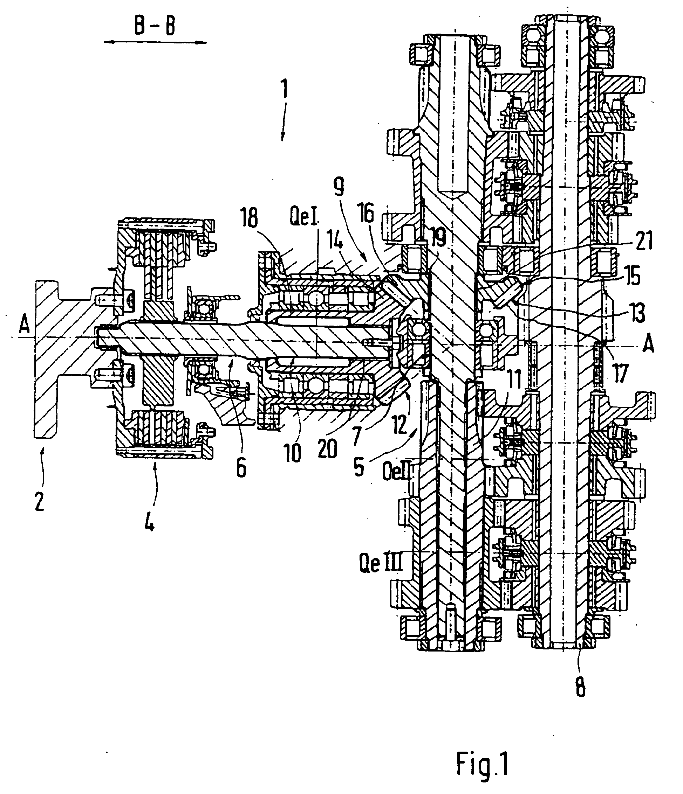

Es zeigen
- Fig. 1: etwa einen horizontalen Schnitt durch Teile einer Brennkraftmaschine und eines Getriebes für eine Personenkraftwagen mit der Einrichtung nach der Erfindung,

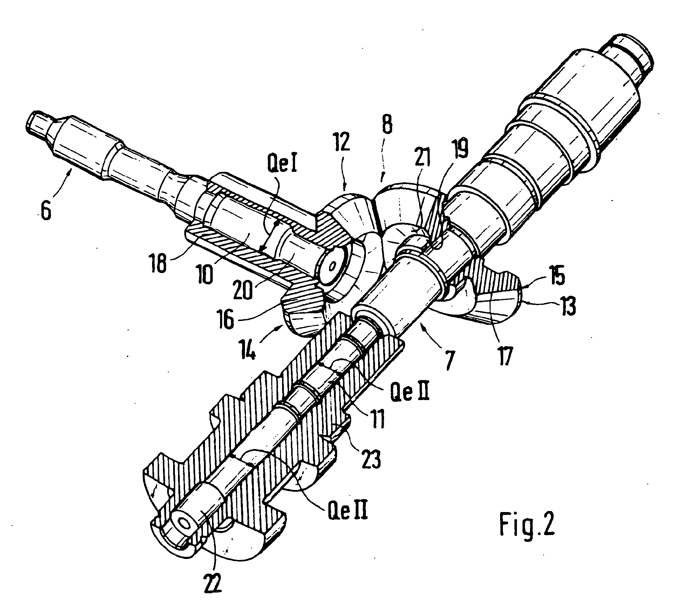

- Fig. 2: eine Schrägansicht auf Teile der Fig. 1 von hinten links.

Eine bspw. im Heck eines nicht näher dargestellten Personenkraftwagens angeordnete Antriebseinheit 1 - Mittelmotorbauweise - umfasst eine Brennkraftmaschine 2 mit einer schematisch angedeuteten Kurbelwelle 3, die unter Zwischenschaltung einer Kupplung 4 mit einem Getriebe 5 zusammenwirkt. Hierzu treibt die Kupplung 4 mit einer Eingangswelle 6 eine Antriebswelle 7 des Getriebes 5 - Bauart Schaltgetriebe - an. Die Antriebswelle 7 und eine Abtriebswelle 8 des Getriebes verlaufen quer zur Längsachse A - A der Eingangswelle 6 bzw. der Kurbelwelle 3, welche Längsachse A-A sich in Längsrichtung B-B des Personenkraftwagens erstreckt. Zwischen Brennkraftmaschine 2 bzw. Kurbelwelle 3 und dem Getriebe 5 ist eine Einrichtung 9 zur Absorption von Drehschwingungen der Brennkraftmaschine 2 vorgesehen.

Die Einrichtung 9 wird dadurch gebildet, dass die Eingangswelle 6 und die Antriebswelle 7 jeweils als relativ verdrehweiche Drehstabfedern 10 und 11 ausgebildet sind. Darüber hinaus sind an der Eingangswelle 6 und an der Antriebswelle 7 erste und zweite Drehmassenvorrichtungen 12 und 13 vorgesehen. Die Drehmassenvorrichtungen 12 und 13 sind durch Zahnräder 14 und 15 dargestellt, die Drehmoment übertragend, also miteinander kämmend zwischen der Eingangswelle 6 und der Antriebswelle 7 arbeiten. Aufgrund der Anordnung der Eingangswelle 6 und der Antriebswelle 7, nämlich quer zueinander, sind die Zahnräder als Kegelräder 16 und 17 ausgeführt.

Die Kegelräder 16 und 17 umgeben mit Naben 18 und 19 die Eingangswelle 6 bzw. die Antriebswelle 7. Zwischen der Nabe 18 des Kegelrads 16 und der Eingangswelle 6 ist eine erste Mitnehmerverzahnung 20 vorgesehen; zwischen Nabe 19 und der Antriebswelle 7 eine zweite Mitnehmerverzahnung 21. Eine dritte Mitnehmerverzahnung 22 verbindet eine Nabe 23 für Festräder 24 von Gängen des Getriebes 4 mit der Antriebswelle 6.

Die Drehstabfedern 10 und 11 werden durch eine oder mehrere Querschnittseinschnürungen Qel, Qell und Qelll der Eingangswelle 6 und der Antriebswelle 7 gebildet. Im Ausführungsbeispiel ist die Einschnürung Qel im Bereich der Nabe 18 des Kegelrads 16 in die Eingangswelle 6 eingearbeitet. Dagegen sind die Querschnittseinschnürungen Qell und Qelll zwischen Nabe 23 und der Antriebswelle 6 vorgesehen.

Die spezielle Konfiguration der Drehstabfedern 10 und 11, der Drehmassenvorrichtungen 12 und 13 und auch der Mitnehmerverzahnungen 20,21 und 22, die für die Einrichtung 9 erforderlich sind, können empirisch, iterativ oder rechnerisch definiert werden.

## Patentansprüche

1. Einrichtung zur Absorption von Drehschwingungen einer Brennkraftmaschine (1), insbesondere für einen Personenkraftwagen, welche Einrichtung zwischen der Brennkraftmaschine (1) und einem Getriebe (5) wirksam ist, wobei eine zwischen der Brennkraftmaschine (1) und dem Getriebe (5) arbeitenden Eingangswelle (6) und eine mit besagter Eingangswelle (6) in Wirkverbindung stehende Antriebswelle (7) des Getriebes (5) jeweils als relativ verdrehweiche Drehstabfedern (10,11) ausgebildet sind, wobei sowohl an der Eingangswelle (6) wie auch an der Antriebswelle (8) Drehmassenvorrichtungen (12,13) vorgesehen sind, **dadurch gekennzeichnet, dass** die Drehmassenvorrichtungen (12,13) durch Zahnräder (14,15) gebildet sind, die im Eingriff miteinander stehen.

2. Einrichtung nach Anspruch 1, **dadurch gekennzeichnet, dass** die Antriebswelle (7) quer zur Längsachse (A-A) der Eingangswelle verläuft, und die Zahnräder (14,15) durch Kegelräder (16,17) dargestellt sind.

3. Einrichtung nach Anspruch 1 oder 2, **dadurch gekennzeichnet, dass** die Kegelräder (16,17) die Eingangswelle (6) und die Antriebswelle (7) mit Naben (18,19) umgeben, wobei zwischen den Naben (18,19) und der Eingangswelle (6) und der Antriebswelle (7) erste und zweite Mitnehmerverzahnungen (20,21) vorgesehen sind.

4. Einrichtung nach einem oder mehreren der vorangehenden Ansprüche, **dadurch gekennzeichnet, dass** die Antriebswelle (7) mittels einer Nabe (23) für Festräder (24) von Gängen des Getriebes (5) versehen ist, welche (23) Nabe unter Zwischenschaltung einer dritten Mitnehmerverzahnung (22) mit der Antriebswelle (7) verbunden ist.

5. Einrichtung nach Anspruch 1, **dadurch gekennzeichnet, dass** die Drehstabfedern (10,11) durch eine oder mehrere Querschnittseinschnürungen (Qel, Qell und Qelll) an der Eingangswelle (6) bzw. der Antriebswelle (7) gebildet werden.

6. Einrichtung nach einem oder mehreren der vorangehenden Ansprüche, **dadurch gekennzeichnet, dass** die Querschnittseinschnürungen (QeI, QeII und QeIII) im Bereich der Naben (18 und 23 des Kegelrads (16) der Eingangswelle (6) bzw. der Festräder (24) der Antriebswelle (7) vorgesehen ist.

## Claims

1. Device for the absorption of torsional vibrations of an internal combustion engine (1), in particular for a passenger car, which device is active between the internal combustion engine (1) and a transmission (5), an input shaft (6), which operates between the internal combustion engine (1) and the transmission (5), and a drive shaft (7), operatively connected to the said input shaft (6), of the transmission (5) being designed in each case as relatively twist-compliant torsion bars (10, 11), rotary-mass devices (12, 13) being provided both on the input shaft (6) and on the drive shaft (8), **characterized in that** the rotary-mass devices (12, 13) are formed by gearwheels (14, 15) which are in engagement with one another.

2. Device according Claim 1, **characterized in that** the drive shaft (7) runs transversely with respect to the longitudinal axis (A - A) of the input shaft, and the gearwheels (14, 15) are formed by bevel wheels (16, 17).

3. Device according to Claim 1 or 2, **characterized in that** the bevel wheels (16, 17) surround the input shaft (6) and the drive shaft (7) by means of hubs (18, 19), first and second dog toothings (20, 21) being provided between the hubs (18, 19) and the input shaft (6) and drive shaft (7).

4. Device according to one or more of the preceding claims, **characterized in that** the drive shaft (7) is provided with a hub (23) for fixed wheels (24) of speed gears of the transmission (5), which hub (23) is connected to the drive shaft (7) with a third dog toothing (22) being interposed.

5. Device according to Claim 1, **characterized in that** the torsion bars (10, 11) are formed by one or more cross-sectional contractions (QeI, QeII and QeIII) on the input shaft (6) and on the drive shaft (7).

6. Device according to one or more of the preceding claims, **characterized in that** the cross-sectional contractions (QeI, QeII and QeIII) are provided in the region of the hubs (18 and 23) of the bevel wheel (16) of the input shaft (6) and of the fixed wheels (24) of the drive shaft (7).

## Revendications

1. Dispositif pour l'absorption des vibrations de rotation d'un moteur à combustion interne (1), en particulier pour un véhicule léger, lequel dispositif agit entre le moteur à combustion interne (1) et une transmission (5), un arbre d'entrée (6) fonctionnant entre le moteur à combustion interne (1) et la transmission (5) et un arbre d'entraînement (7) de la transmission (5) en liaison fonctionnelle avec ledit arbre d'entrée (6) étant réalisés à chaque fois sous forme de ressorts à barre de torsion (10, 11) relativement déformables en rotation, et des dispositifs à masse rotative (12, 13) étant prévus à la fois sur l'arbre d'entrée (6) et sur l'arbre d'entraînement (8), **caractérisé en ce que** les dispositifs à masse rotative (12, 13) sont formés par des roues dentées (14, 15) qui sont en prise l'une avec l'autre.

2. Dispositif selon la revendication 1, **caractérisé en ce que** l'arbre d'entraînement (7) s'étend transversalement à l'axe longitudinal (A-A) de l'arbre d'entrée et les roues dentées (14, 15) sont constituées par des roues coniques (16, 17).

3. Dispositif selon la revendication 1 ou 2, **caractérisé en ce que** les roues coniques (16, 17) entourent l'arbre d'entrée (6) et l'arbre d'entraînement (7) avec des moyeux (18, 19), des première et deuxième dentures d'entraînement (20, 21) étant prévues entre les moyeux (18, 19) et l'arbre d'entrée (6) et l'arbre d'entraînement (7).

4. Dispositif selon l'une quelconque ou plusieurs des revendications précédentes, **caractérisé en ce que** l'arbre d'entraînement (7) est pourvu d'un moyeu (23) pour des roues fixes (24) de vitesses de la transmission (5), lequel moyeu (23) est connecté à l'arbre d'entraînement (7) par l'intermédiaire d'une troisième denture d'entraînement (22).

5. Dispositif selon la revendication 1, **caractérisé en ce que** les ressorts à barre de torsion (10, 11) sont formés par un ou plusieurs rétrécissements de section transversale (QeI, QeII et QeIII) sur l'arbre d'entrée (6) ou l'arbre d'entraînement (7).

6. Dispositif selon l'une quelconque ou plusieurs des revendications précédentes, **caractérisé en ce que** les rétrécissements de section transversale (Qel, QeII, QeIII) sont prévus dans la région des moyeux (18 et 23) de la roue conique (16) de l'arbre d'entrée (6) ou des roues fixes (24) de l'arbre d'entraînement (7).
